# EUROPEAN PATENT APPLICATION

(11) **EP 1 447 282 A2**
(43) Date of publication of application: **18.08.2004**
(21) Application number: 04003069.4
(22) Date of filing: 11.02.2004
(51) Int. Cl.: B60R 16/02, B62J 3/00, B60Q 5/00

(54) **Systeme and method of operating a vehicle**

(30) Priority: 12.02.2003 JP 2003034106
(71) Applicant: YAMAHA HATSUDOKI KABUSHIKI KAISHA, Iwata-shi Shizuoka-ken (JP)
(72) Inventor: Yoshizawa, Akihiro, 2500 Shingai Iwata-shi Shizuoka-ken (JP)
(74) Representative: Grünecker, Kinkeldey, Stockmair & Schwanhäusser Anwaltssozietät

(57) **Abstract**

The invention relates to a vehicle and a method of operating same.

The invention aims to provide a vehicle and a method capable of generating sounds and providing satisfactory operability for a vehicle.

The invention provides a method of operating a vehicle, in particular a motorcycle, by switching a drive means (28) to plural modes, and by generating sounds with different volumes and/or plural types of sound, wherein the switching of a mode of the drive means (28) and an adjustment of a volume and/or the generation of a type of sound are performed with a kind of operation. Further, the invention provides a vehicle operable by such a method.

## Description

The present invention relates to a method of operating a vehicle and to a vehicle, in particular operable by such a method.

Vehicles such as e.g. motorcycles are generally known. However, in some situations, in particular before and after a riding action, it is desirable for the rider to receive some information on an actual operating condition of the vehicle so he can quickly judge further steps of action to take.

Therefore, it is an object of the invention to provide a method of operating a vehicle as well as a vehicle, in particular operable by such a method, which is capable of generating and outputting a status information on an operating condition of the vehicle.

According to a method aspect, this objective is solved in an inventive manner by a method of operating a vehicle, in particular a motorcycle, by switching a drive means to plural modes, and by generating sounds with different volumes and/or plural types of sound, wherein the switching of a mode of the drive means and an adjustment of a volume and/or the generation of a type of sound are performed with a kind of operation. Alternatively, this objective is solved in an inventive manner by a method of operating a vehicle, in particular a motorcycle, by generating sounds with different volumes and plural types of sound, wherein a selection of a type of sound and an adjustment of a volume of the sound are performed with a kind of operation.

According to an apparatus aspect of the invention, this object is solved in an inventive manner by a vehicle, in particular operable by a method as mentioned above, comprising a drive means being switchable to plural modes, a sound generation means capable of generating sounds of different volumes and/or plural types of sound, and a controller, which is capable of performing a switching of a mode of the drive means and an adjustment of a volume and/or the generation of a type of sound of the sound generation means with a kind of operation. Alternatively, this objective is solved in an inventive manner by a vehicle, in particular operable by a method as mentioned above, comprising a sound generation means capable of generating sounds with different volumes and plural types of sound, and a controller which is capable of performing selection of a type of sound and an adjustment of a volume of the sound with a kind of operation.

By providing such a method for operating a vehicle and such a vehicle, the driver or rider of the vehicle can quickly receive information on the vehicle's operating condition. Furthermore, it is unnecessary to perform separate operations such as e.g. the actuation of separate switches, for the switching of a mode and the selection of a type of sound and, therefore, satisfactory operability for a vehicle can be provided.

In that, according to the invention, the method for operating the vehicle and the vehicle provides sound generation means capable of generating plural types of sound, in which the sound generation means is formed so as to be capable of generating sounds with different volumes, and/or a selection of a type of sound, and/or adjustment of a volume of the sound by the sound generation means and in that these operations are performed with a kind of operation. It is unnecessary to perform separate operations for the selection of a type of sound and the adjustment of a volume and, therefore, a vehicle which is capable of generating sounds and has satisfactory operability for a vehicle can be provided.

As an advantage of the invention, it is unnecessary to perform separate operations such as e.g. the actuation of different switches for the switching of a mode, the selection of a type of sound, and/or adjustment of a volume and, therefore, a vehicle which is capable of generating sounds and has satisfactory operability for a vehicle can be provided.

Preferably, a vehicle according to the invention comprises plural operation elements which are operable by the kind of operation. Further preferably, each of the plural types of sound is allocated to each of the plural operation elements.

According to an embodiment of the invention, the vehicle comprises plural operation elements which are operated by the kind of operation, and each of the plural types of sound is allocated to each of the plural operation elements. Thus, a type of sound can be selected if a desired operation element is operated.

Moreover, the adjustment of a volume is performed according to duration of the kind of operation or the number of times of singular operations included in the kind of operation.

According to another embodiment, the adjustment of a volume is performed according to duration of the kind of operation or the number of times of operation included in the kind of operation. Thus, a desired volume can be obtained according to duration of an operation or the number of times of plural numbers of times of operation included in a kind of operation.

Preferably, the sound generation means generates a sound corresponding to each of plural events which occur in the vehicle, and at least sounds corresponding to two events included in the plural events are different from each other.

According to a further preferred embodiment, the sound generation means generates a sound corresponding to each of plural events which occur in the vehicle, and at least sounds corresponding to two events included in the plural events are different from each other. Thus, a sound according to a state of the vehicle and corresponding to an event which occurs in the vehicle can be generated while improving operability. Therefore, different events can be distinguished to be communicated to a rider.

Moreover, in the case in which one theme is associated with the plural kinds of or types of sounds and the theme is set in plural form, in the selection of a type of sound, one theme is selected out of the plural themes.

Preferably, in the case in which one theme is associated with the plural sounds and the theme is set in plural form, in the selection of a type of sound, one theme is selected out of the plural themes. Thus, it is unnecessary to perform an operation for selection of a theme and other operations separately and, moreover, plural kinds or types of sounds can be switched simultaneously according to feeling of a rider. Therefore, a vehicle which is capable of generating sounds and has satisfactory operability for a vehicle can be provided.

More preferably, the plural kinds or types of sounds to which the one theme is associated correspond to plural events which occur in the vehicle.

According to a particular embodiment, plural kinds of sounds or types of sounds to which the one theme is associated correspond to plural events which occur in the vehicle. Thus, different events can be distinguished to be communicated to a rider and, moreover, the plural events can be communicated with plural kinds or types of sounds which are different for each theme.

According to a further embodiment, the invention provides operation elements which are operated by the kind of operation, and in that the operation elements are provided in display means for displaying a vehicle speed.

In that, operation elements which are operable by the kind of operation are provided, and in that the operation elements are preferably provided in a display means for displaying a vehicle speed, the operation elements which are operated by the kind of operation can be found to perform operation promptly.

Preferably, these operation elements are push switches.

Since the operation elements are push switches, switching or the like of a mode can be easily performed by a pressing operation.

According to a further preferred embodiment of the present invention, the vehicle is a saddle-ride type vehicle, in particular an (electric) motorcycle.

Further preferably, the drive means of such a vehicle is switchable to an operation waiting mode in which the vehicle is unable to start to move and to a travel mode in which the vehicle is able to start to move.

Thus, operability at the time when the vehicle starts to move is improved.

Further preferred embodiments of the invention are subject to the respective subclaims.

In the following, the invention will be described by means of an embodiment with reference to the accompanying drawings, wherein:
- Fig. 1: is a side view of an electric motorcycle 1 as an example of the invention;
- Fig. 2: is a plan view of a meter 8 as shown in Fig. 1;
- Fig. 3: is an electric circuit diagram of a vehicle controller 30 which controls a meter controller 81, a sound unit 83, and an electric system of the electric motorcycle 1;
- Fig. 4: is a flowchart in the case in which a first program is set in a CPU 812;
- Fig. 5: is a table showing, for each theme, which sound continues to occur to which extent when which event occurs in the electric motorcycle 1; and
- Fig. 6: is a transition chart of modes in the electric motorcycle 1.

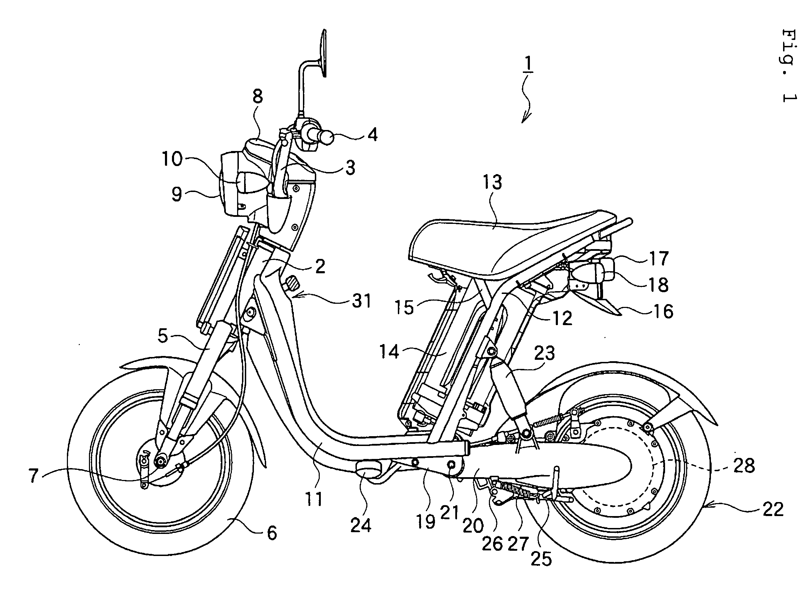

Fig. 1 is a side view of an electric motorcycle 1 as an embodiment of the present invention.

The electric motorcycle 1 shown in Fig. 1 is provided with a head pipe 2 in an upper part in the front of a body thereof, and a not-shown steering shaft is pivotably inserted through the head pipe 2. In addition, a handlebar 3 is attached to an upper end of this steering shaft. Further, grips 4 are attached to both ends of the handlebar 3. A not-shown grip 4 on the right side (backside of Fig. 1) constitutes a pivotable throttle grip.

Upper parts of a pair of left and right front forks 5 are attached to a lower part of the head pipe 2, and a front wheel 6 is axially supported by a front wheel shaft 7 so as to rotate freely at a lower end of each front fork 5. Note that a meter 8 for displaying a vehicle speed is arranged above the center of the handlebar 3, and a head lamp 9 is arranged below the meter 8. On both sides of the head lamp 9, flasher lamps 10 (only one of them is illustrated in Fig. 1) are provided, respectively.

A pair of left and right body frames 11 are extended from the head pipe 2 toward the rear of the body. That is, the body frames 11 have a round pipe shape and, after extending diagonally downward toward the rear of the body from the head pipe 2, are bent in an arc shape toward the rear and extend substantially horizontally to the rear of the body. A pair of left and right body frames 12 are extended from the rear end of each body frame 11 diagonally upward and are connected with each other in the rear of a sheet 13. A battery 14 is arranged between the pair of left and right body frames 12.

Incidentally, a sheet stay (not shown) formed in a reverse U shape is connected to the left and right body frame 12 and is supported by a pair of left and right stays 15 (only one of them is illustrated). The sheet 13 is arranged on the sheet stay so as to open and close freely.

Further, a tail lamp 17 is attached to a rear surface of a rear fender 16 attached to the rear end of the body frame 12, and flasher lamps 18 (only one of them is illustrated) are arranged on the left and right thereof.

On the other hand, a pair of left and right rear arm brackets 19 (only one of them is illustrated) are welded to the rear end part of the left and right body frames 11, respectively, and a front end of a rear arm 20 is supported on the rear arm brackets 19 by a pivot shaft 21 so as to swing up and down freely. Further, a rear wheel 22 serving as a drive wheel is axially supported at the rear end of this rear arm 20 so as to rotate freely, and the rear arm 20 and the rear wheel 22 are suspended on the body frame 12 by a rear cushion 23.

In addition, foot steps 24 (only one of them is illustrated) are attached below the left and right body frames 11, respectively. A side stand 25 is provided below the rear arm 20 while being axially supported by a shaft 26 so as to pivot freely, and the side stand 25 is biased to a closed side by a return spring 27.

An electric motor 28 (drive means) of an axial gap type, which is flat in a vehicle width direction and thin, is contained in a substantially circular part at the rear end of the rear arm 20.

In addition, a main switch 31, which is operated by a key, is provided below the meter 8.

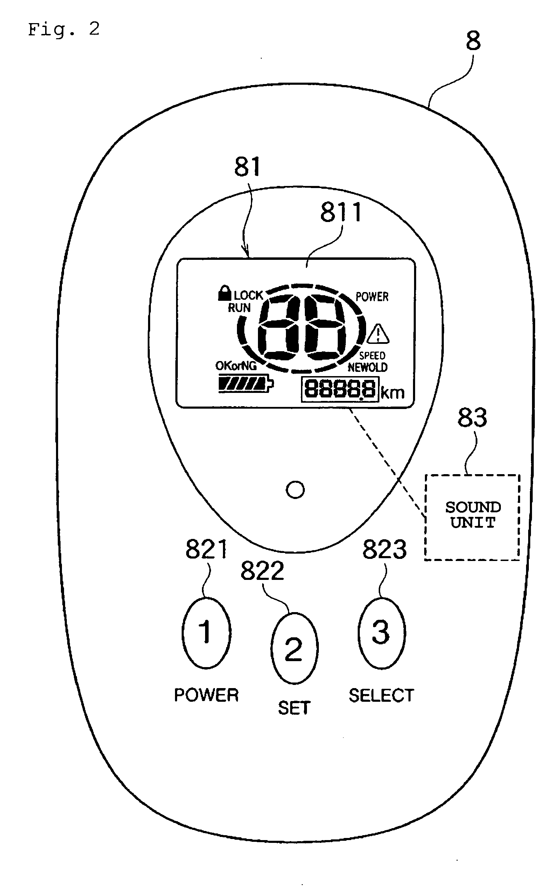

Fig. 2 is a plan view of the meter 8.

The meter 8 is provided with a meter controller 81, and a display section 811 provided in the meter controller 81 is exposed in the upper part of the meter 8. A vehicle speed, a remaining amount of battery, a traveled distance, and the like are displayed on the display section 811.

The meter 8 is provided with switches 821, 822, 823 (operation elements) of a push type which are electrically connected to the meter controller 81. In addition, a sound unit 83 (sound generation means), which is a generation source of various sounds according to a state of the electric motorcycle 1 and content of operation applied to the electric motorcycle 1, is electrically connected to the meter controller 81. Note that the switches 821, 822, and 823 are switches for setting a password and switching a type of odo/trip meter. In the electric motorcycle 1, such switches are utilized effectively. In addition, sound may be sound generated by a single frequency oscillation or may be voice, music, or the like with changing frequencies.

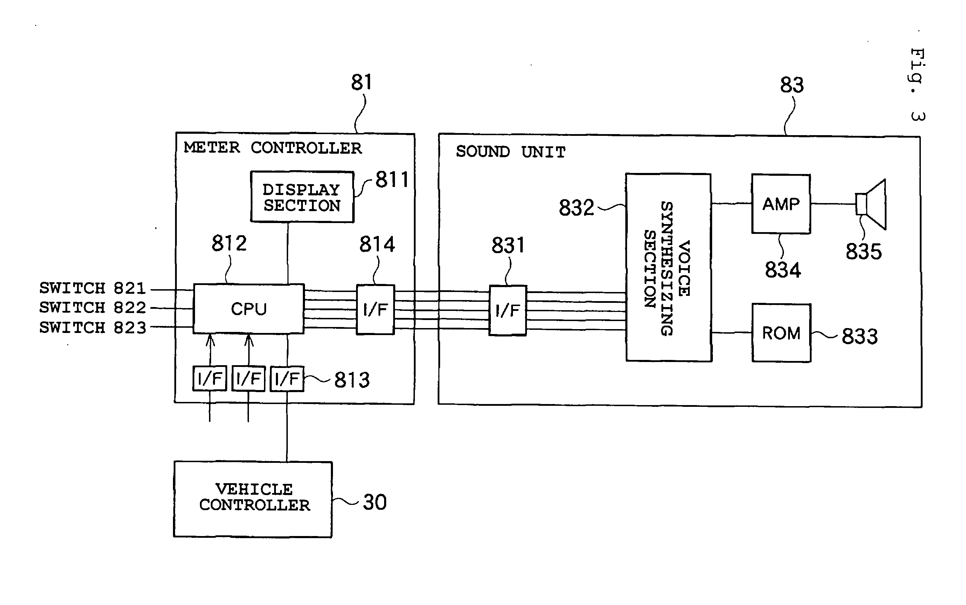

Fig. 3 is an electric circuit diagram of a vehicle controller 30 which controls the meter controller 81, the sound unit 83, and an electric system of the electric motorcycle 1.

The meter controller 81 is provided with a CPU 812 and interface sections 813 and 814 other than the display section 811. The CPU 812 is connected to the switches 821, 822, and 823 and the display section 811. The interface sections 813 are connected between the CPU 812 and the vehicle controller 30. The interface section 814 is connected between the CPU 812 and the interface sections 813 of the sound unit 83. Electric wirings from left and right winker switches are also connected to the CPU 812.

The sound unit 83 is provided with a voice synthesizing section 832, a ROM 833, an amplifier 834, and a speaker 835 other than an interface section 831. The interface section 831, the ROM 833, and the amplifier 834 are connected to the voice synthesizing section 832, and the speaker 835 is connected to the amplifier 834.

Twenty-nine types of voice data SD1 to SD29 are stored in the ROM 833.

The vehicle controller 30 is electrically connected to the main switch 31 shown in Fig. 1.

Next, actions of the present invention will be described. Note that a program can be set and data can be stored in the CPU 812. First, an operation in the case in which a first program is set will be described.

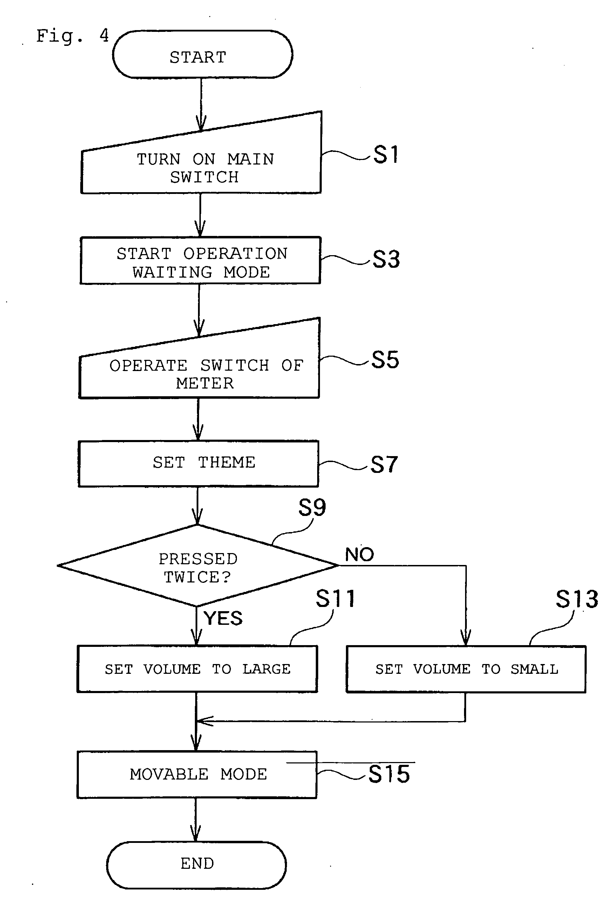

Fig. 4 is a flowchart in the case in which the first program is set in the CPU 812. When the main switch 31 is turned ON (step S1), the vehicle controller 30 connected to the main switch 31 enters a start operation waiting mode (step S3). The vehicle controller 30 which has entered the start operation waiting mode stands by for only a signal of start operation end from the meter controller 81.

Incidentally, here, any one of the switches 821, 822, and 823 is operated (step S5). This operation is equivalent to a single operation (hereinafter referred to as operation) of the present invention. Then, the CPU 812 sets a theme according to which switch was operated (step S7).

More specifically, themes "normal", "sound A", and "sound B" are allocated to the switches 821, 822, and 823, respectively.

Here, the theme is a name representing plural sounds of the same type. For example, the theme "normal" represents sounds which tend to be accepted regardless of genders, the theme "sound A" represents sounds which tend to be accepted particularly by female, and the theme "sound B" represents sounds which tend to be accepted particularly by male.

The CPU 812 sets the theme "normal", the theme "sound A", and the theme "sound B" when the switch 821, the switch 822, and the switch 823 are pressed, respectively.

Next, the CPU 812 judges whether or not a switch is pressed twice, that is, whether or not a switch is pressed twice within a time range set in advance (step S9). Here, when it is judged YES, the CPU 812 sets a volume to a larger one of two stages (step S11). On the other hand, when it is judged NO, the CPU 812 sets a volume to a smaller one of two stages (step S 13).

Upon ending the processing of step S11 or S13, the CPU 812 gives a signal of start operation end to the vehicle controller 30. Consequently, the vehicle controller 30 enters a movable mode (step S15), and the electric motorcycle 1 becomes capable of driving the electric motor 28 according to a throttle position to accelerate.

Note that, in the electric motorcycle 1, the vehicle controller 30 is capable of entering each of a normal mode in which power consumption and torque are normal, an economy mode in which power consumption is controlled, and a power mode in which torque larger than normal can be obtained. Instead of or in addition to performing switching from the start operation waiting mode to the movable mode in the above-mentioned processing, switching among the normal mode, the economy mode, and the power mode may be performed. Operability can be further improved by performing such switching according to a single operation.

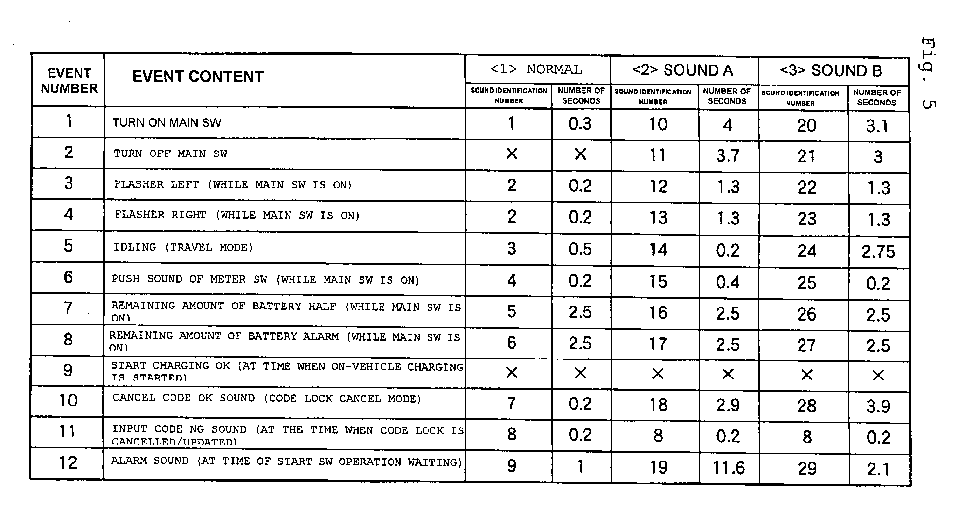

Fig. 5 is a table showing, for each theme, which sound continues to be generated to which extent when which event occurs in the electric motorcycle 1. The table is stored such that the CPU 812 can read out data at any time.

An event in this context means an event which automatically occurs according to an operation of a rider, detection of a sensor in the electric motorcycle 1, or the like. Note that an event which has occurs is identified by an event number. In addition, a sound which is to be generated is identified by a sound identification number. Further, the duration of a sound is stored in seconds.

Here, as shown in Fig. 5, sounds of the same type are represented by an identical theme, but at least plural types of sound which are different from each other are included in the sounds. For example, sounds of sound identification numbers "1" to "9" are sounds of the same type. However, strictly speaking, a sound of the sound identification number "1" and a sound of the sound identification number "2" are different sounds.

In addition, a sound identification number or the like are not associated with an event number, whereby a sound is not generated even when an event of the event number occurs. The event number which does not allow a sound to be generated in that case can be set arbitrarily for each theme. That is, as shown in Fig. 5, in the electric motorcycle 1, sound identification numbers or the like are not associated with event numbers "2" and "9" in the theme "normal". However, the sound identification numbers or the like are not associated only with the event number "9" in the themes "sound A" and "sound B". In this way, since an event in which a sound is not generated can be set for each theme, complexity in the case in which events in which a sound is not generated are set one by one can be eliminated.

Incidentally, in the following description, operations in the case in which a theme is set to "sound A", a volume is set to "large", and a remaining amount of battery is reduced to half will be described. However, in the electric motorcycle 1, operations are performed in the same manner for other events.

When the remaining amount of battery is reduced to half, this event is notified to the vehicle controller 30, and the vehicle controller 30 in turn notifies this event to the CPU 812 of the meter controller 81 with an event number "7". The CPU 812 refers to the table of Fig. 5 and reads out a sound identification number "16" corresponding to this event number "7" and duration "2.5 seconds" of a sound. Moreover, the CPU 812 reads out a volume (large or small) set at this point and notifies these to the sound unit 83. Note that, in the case in which a sound identification number cannot be read out, processing for sound ends.

In the sound unit 83, the voice synthesizing section 832 reads out voice data SD16, which corresponds the sound identification number "16" notified from the CPU 812, from the ROM 833, uses this voice data SD16 to synthesize an analog signal of an amplitude corresponding to the notified volume "large" by the notified duration "2.5 seconds", and gives the analog signal to the AMP 834. When the AMP 834 amplifies the analog signal from the voice synthesizing section 832 and gives it to the speaker 835, a sound according to this amplified analog signal is generated from the speaker 835.

Note that it is also possible that a second program, which is different only in processing of step S9, is set in the CPU 812, and it is judged in step S9 whether or not a switch is pressed for a long time, that is, whether or not a switch continues to be pressed for duration set in advance.

Incidentally, the case in which a third program, which allows to set only a volume in multiple stages, is set in the CPU 812 will be described.

In this case, the same operation as the operation up to step S7 shown in Fig. 4 is performed. Then, once a theme is set, when the switch 822 is operated, the CPU 812 lowers the setting of a volume by one stage and sends a signal to the display section 811 to reduce the number of "0" for indication of a traveled distance. On the other hand, when the switch 823 is operated, the CPU 812 raises the setting of a volume by one stage and sends a signal to the display section 811 to increase the number of "0" for indication of a traveled distance. Note that, at the time when the number of "0" is the largest (e.g., five), in the case in which the switch 823 is operated, the CPU 812 sets the setting of a volume to the lowest stage and sends a signal to the display section 811 to set the number of "0" for indication of a traveled distance to zero. That is, setting of a volume can be performed only by the switch 823.

Note that operations in generating sounds according to a vehicle operation or movement for duration according to the operation or the like and with a set volume are the same as those in the case in which the first and second programs are set except that volumes are set in multiple stages.

In addition, volumes can be set linearly rather than step by step according to a length of time during which any one of the switches 821, 822, and 823 is pressed. Fig. 4 is a state transition chart showing states through which the electric motorcycle 1 of this embodiment (a system including a VTC 29, a BMC microcomputer 35, a meter microcomputer 38, and a charger microcomputer 40 (at the time of charging) of the electric motorcycle 1) is capable of transitioning.

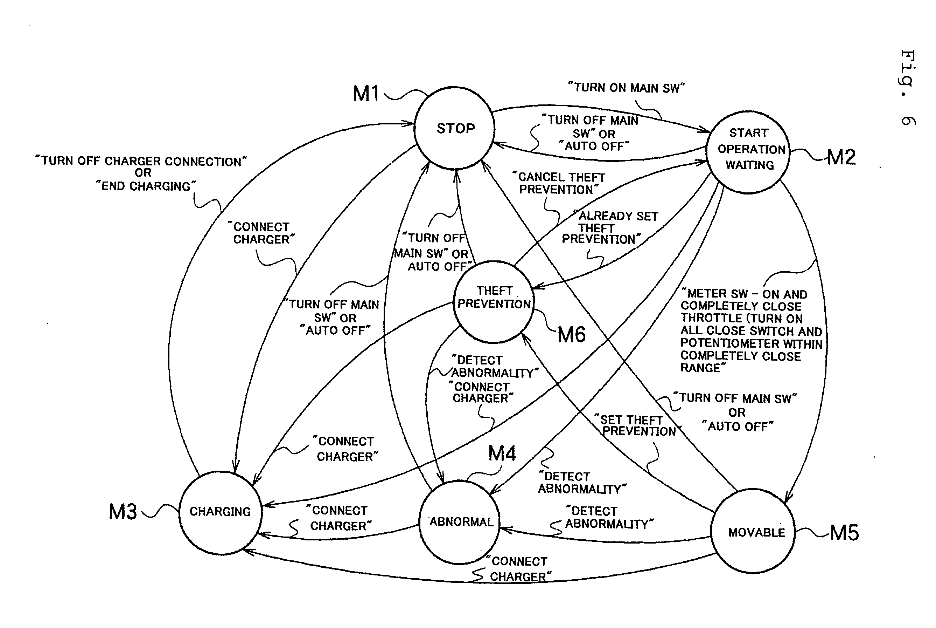

Fig. 6 is a transition chart of modes in the electric motorcycle 1.

In a stop mode M1 of the electric motorcycle 1, if a main switch is turned ON, the motorcycle 1 transitions to a start operation waiting mode M2 and, if a charger is connected, the motorcycle 1 transitions to a charging mode M3.

In the start operation waiting mode M2, any one of the switches 821, 822, and 823 is pressed and, a throttle is completely closed or in a state equivalent to it at that point, the electric motorcycle 1 transitions to a movable mode M5 (travel mode). Control in this case is as shown in Fig. 4. However, in Fig. 4, processing for the throttle is omitted.

In addition, in the start operation waiting mode M2, the electric motorcycle 1 transitions to the charging mode M3 if the charger is connected, transitions to an abnormal mode M4 if abnormality is detected, transitions to a theft prevention mode M6 if setting for theft prevention is performed, or transitions to a stop mode M1 if the main switch is turned OFF or is automatically brought into a state equivalent to OFF (automatically turned OFF).

In the charging mode M3, the electric motorcycle 1 transitions to the stop mode M1 if the charger is disconnected or charging ends.

In the abnormal mode M4, the electric motorcycle 1 transitions to the charging mode M3 if the charger is connected or transitions to the stop mode M1 if the main switch is turned OFF or is automatically brought into a state equivalent to OFF (automatically turned off).

In the movable mode M5, the electric motorcycle transitions to the stop mode M1 if the main switch is turned OFF or is automatically brought into a state equivalent to OFF (automatically turned off), transitions to the charging mode M3 if the charger is connected, transitions to the abnormal mode M4 if abnormality is detected, or transitions to the theft prevention mode M6 if setting for theft prevention is performed.

In the theft prevention mode M6, the electric motorcycle 1 transitions to the stop mode M1 if the main switch is turned OFF or is automatically brought into a state equivalent to OFF (automatically turned OFF), transitions to the charging mode M3 if the charger is connected, transitions to the abnormal mode M4 if abnormality is detected, or transitions to the start operation waiting mode M2 if the setting of theft prevention is cancelled.

As described above, the electric motorcycle 1 of this embodiment is a vehicle which comprises: the electric motor 28 (drive means of a vehicle); and the sound unit 83 (sound generation means) capable of generating plural kinds of sound, in which the electric motor 28 is formed so as to be switchable to plural modes, and switching of a mode of the electric motor 28 and selection of a type of sound of the sound unit 83 are performed with a single operation. Thus, it is unnecessary to perform separate operations for the switching of a mode and the selection of a type of sound and, therefore, a vehicle which is capable of generating sounds and has satisfactory operability for a vehicle can be provided.

Note that, since the electric motorcycle 1 is adapted such that sounds are preferably not generated during traveling, driving is not prevented by sounds according to this particular embodiment.

In addition, the electric motorcycle 1 of this embodiment is a vehicle which comprises: the electric motor 28 (drive means for a vehicle); and the sound unit 83 (sound generation means) capable of generating sounds with different volumes, in which the electric motor 28 is formed so as to be switchable to plural modes, and switching of a mode of the electric motor 28 and adjustment of a volume of the sound unit 83 are performed with a single operation. Thus, it is unnecessary to perform separate operations for the switching of a mode and the adjustment of a volume and, therefore, a vehicle which is capable of generating sounds and has satisfactory operability for a vehicle can be provided.

In addition, the electric motorcycle 1 of this embodiment is a vehicle which comprises the sound unit 83 (sound generation means) capable of generating plural types of sound, in which the sound unit 83 is formed so as to be capable of generating sounds with different volumes, and selection of a type of sound and adjustment of a volume of the sound unit 83 are performed with a single operation. Thus, it is unnecessary to perform separate operations for the selection of a type of sound and the adjustment of a volume and, therefore, a vehicle which is capable of generating sounds and has satisfactory operability for a vehicle can be provided.

In addition, the electric motorcycle 1 of this embodiment is a vehicle which comprises: the electric motor 28 (drive means for a vehicle); and the sound unit 83 (sound generation means) capable of generating plural types of sound, in which the electric motor 28 is formed so as to be switchable to plural modes and the sound unit 83 is formed so as to be capable of generating sounds with different volumes, and switching of a mode of the electric motor 28 and selection of a type of sound and adjustment of a volume of the sound unit 83 are performed with a single operation. Thus, it is unnecessary to perform separate operations for the switching of a mode, the selection of a type of sound, and adjustment of a volume and, therefore, a vehicle which is capable of generating sounds and has satisfactory operability for a vehicle can be provided.

In addition, according to the electric motorcycle 1 of this embodiment, the electric motorcycle 1 comprises the switches 821, 822, and 823 (plural operation elements) which are operated by the single operation, and each of the plural types of sound is allocated to each of the switches 821, 822, and 823. Thus, a type of sound can be selected if a desired operation element is operated.

In addition, according to the electric motorcycle 1 of this embodiment, the adjustment of a volume is performed according to duration of the single operation or the number of times of operation included in the single operation. Thus, a desired volume can be obtained according to duration of an operation or the number of times of plural numbers of times of operation included in a single operation.

In addition, the sound unit 83 generates a sound corresponding to each of plural events which occur in the electric motorcycle 1, and at least sounds corresponding to two events included in the plural events are different from each other. Thus, a sound according to a state of the vehicle and corresponding to an event which occurs in the vehicle can be generated while improving operability. Therefore, different events can be distinguished to be communicated to a rider.

In addition, in the case in which one theme is associated with the plural sounds and the theme is set in plural form, in the selection of a type of sound, one theme is selected out of the plural themes. Thus, it is unnecessary to perform an operation for selection of a theme and other operations separately and, moreover, plural sounds can be switched simultaneously according to feeling of a rider. Therefore, a vehicle which is capable of generating sounds and has satisfactory operability for a vehicle can be provided.

In addition, the plural sounds to which the one theme is associated correspond to plural events which occur in the electric motorcycle 1. Thus, different events can be distinguished to be communicated to a rider and, moreover, the plural events can be communicated with plural sounds which are different for each theme.

In addition, since the switches 821, 822, and 823 are provide in the meter 8 (display means) for displaying a vehicle speed, the switches 821, 822, and 823 can be found and operated promptly.

In addition, since the switches 821, 822, and 823 are push switches, switching or the like of a mode can be performed easily by a pressing operation.

In addition, since the electric motorcycle 1 is a saddle-ride type vehicle, a saddle-ride type vehicle which is capable of generating sounds and has satisfactory operability for a vehicle can be provided.

In addition, since the electric motor 28 is switchable to an operation waiting mode in which the vehicle is unable to start to move and a travel mode in which the vehicle is able to start to move. Thus, operability at the time when the vehicle starts to move is improved.

Further, the present invention is applicable to a saddle-ride type vehicle such as a scooter, a motorcycle, or an ATV (buggy/four wheel drive).

As described above, according to the vehicle of the present invention, there is provided a vehicle which comprises: drive means for a vehicle; and sound generation means capable of generating plural types of sound, in which the drive means is formed so as to be switchable to plural modes, and switching of a mode of the drive means and selection of a type of sound of the sound generation means are performed with a kind of operation, in particular a single operation. Thus, it is unnecessary to perform separate, in particular different kinds of operations for the switching of a mode and the selection of a type of sound and, therefore, a vehicle which is capable of generating sounds and has satisfactory operability for a vehicle can be provided.

In addition, there is provided a vehicle which comprises: drive means for a vehicle; and sound generation means capable of generating sounds with different volumes, in which the drive means is formed so as to be switchable to plural modes, and switching of a mode of the drive means and adjustment of a volume of the sound generation means are performed with a kind of operation. This operation can comprise one or more single actions of the same kind. Thus, it is unnecessary to perform separate operations for the switching of a mode and the adjustment of a volume and, therefore, a vehicle which is capable of generating sounds and has satisfactory operability for a vehicle can be provided.

Further, there is provided a vehicle which comprises sound generation means capable of generating plural types of sound, in which the sound generation means is formed so as to be capable of generating sounds with different volumes, and selection of a type of sound and adjustment of a volume of the sound generation means are performed with a kind of operation which can comprise one or more single operations of the same kind. Thus, it is unnecessary to perform separate operations for the selection of a type of sound and the adjustment of a volume and, therefore, a vehicle which is capable of generating sounds and has satisfactory operability for a vehicle can be provided.

As described before, the above invention as explained by means of an embodiment relates to a vehicle which is capable of generating sounds and has satisfactory operability for a vehicle and to a method for operating such a vehicle.

Accordingly, there has been provided a vehicle such as a motorcycle mounted with an audio apparatus which is capable of adjusting sounds.

The vehicle capable of generating sounds as described above has a structure, for example, for adjusting sound without going through stages and, therefore, is always suitable for executing plural operations such as adjustment of a volume and start of the vehicle in a short time. In addition, in a vehicle which can generate plural types of sound, it is thereby possible to select sound according to feeling of a rider or an environment of use of the vehicle.

Accordingly, the vehicle is capable of generating sounds and has satisfactory operability for a vehicle.

As described before, the vehicle and the method of operating such a vehicle preferably comprises drive means for a vehicle; and sound generation means capable of generating plural types of sound, the drive means being formed so as to be switchable to plural modes, and in that switching of a mode of the drive means and selection of a type of sound of the sound generation means are performed with a single kind of operation.

Accordingly, the vehicle is a vehicle which preferably comprises: drive means for a vehicle; and sound generation means capable of generating plural types of sound, in which the drive means is formed so as to be switchable to plural modes, and switching of a mode of the drive means and selection of a type of sound of the sound generation means are performed with a kind of operation which can comprise one or more actions or operations of a single kind or type. Thus, it is unnecessary to perform separate operations for the switching of a mode and the selection of a type of sound and, therefore, a vehicle and a method which is capable of generating sounds and has satisfactory operability for a vehicle can be provided.

According to a second embodiment, the method of operating a vehicle preferably comprises: drive means for a vehicle; and sound generation means capable of generating sounds with different volumes, the drive means being formed so as to be switchable to plural modes, and in that switching of a mode of the drive means and adjustment of a volume of the sound generation means are performed with a kind of operation as described above.

Once again, the vehicle is a vehicle which preferably comprises: drive means for a vehicle; and sound generation means capable of generating sounds with different volumes, in which the drive means is formed so as to be switchable to plural modes, and switching of a mode of the drive means and adjustment of a volume of the sound generation means are performed with a kind of operation. Thus, it is unnecessary to perform separate operations, in particular different types or kinds of operation, such as e.g. the actuation of different switches or various operation elements, for the switching of a mode and the selection of a type of sound and, therefore, a vehicle and a method which is capable of generating sounds and has satisfactory operability for a vehicle can be provided.

According to another embodiment, the method of operating a vehicle preferably comprises sound generation means capable of generating plural types of sound, the sound generation means being formed so as to be capable of generating sounds with different volumes, and in that selection of a type of sound and adjustment of a volume of the sound generation means are performed with a kind of operation.

Accordingly, the vehicle is a vehicle which preferably comprises sound generation means capable of generating plural types of sound, in which the sound generation means is formed so as to be capable of generating sounds with different volumes, and selection of a type of sound and adjustment of a volume of the sound generation means are performed with a kind of operation. Thus, it is unnecessary to perform separate (kinds of) operations for the selection of a type of sound and the adjustment of a volume and, therefore, a vehicle and a method which is capable of generating sounds and has satisfactory operability for a vehicle can be provided.

According to still another embodiment, the method of operating a vehicle preferably comprises: drive means for a vehicle; and sound generation means capable of generating plural types of sound, the drive means being formed so as to be switchable to plural modes and the sound generation means being formed so as to be capable of generating sounds with different volumes, and in that switching of a mode of the drive means and selection of a type of sound and adjustment of a volume of the sound generation means are performed with a kind of operation.

Accordingly, the vehicle is a vehicle which preferably comprises: drive means for a vehicle; and sound generation means capable of generating plural types of sound, in which the drive means is formed so as to be switchable to plural modes and the sound generation means is formed so as to be capable of generating sounds with different volumes, and switching of a mode of the drive means and selection of a type of sound and adjustment of a volume of the sound generation means are performed with a kind of operation. Thus, it is unnecessary to perform separate (kinds of) operations as in particular the operation of separate operation elements for the switching of a mode, the selection of a type of sound, and adjustment of a volume and, therefore, a vehicle and a method which is capable of generating sounds and ahs satisfactory operability for a vehicle can be provided.

In other words, the invention provides a vehicle which is capable of generating sounds and has satisfactory operability for a vehicle. Therein, a CPU 812 judges whether or not a switch is pressed twice, that is, whether or not a switch is pressed twice within a time range set in advance (step S9). Here, when it is judged YES, the CPU 812 sets a volume to a larger one of two stages (step S11). On the other hand, when it is judged NO, the CPU 812 sets a volume to a smaller one of two stages (step S13). Upon ending the processing of step S11 or S13, the CPU 812 gives a signal of start operation end to a vehicle controller 30. Consequently, the vehicle controller 30 enters a movable mode (step S15), and the electric motorcycle 1 becomes capable of driving the electric motor 28 according to a throttle position to accelerate.

## Claims

1. Method of operating a vehicle, in particular a motorcycle, by switching a drive means (28) to plural modes, and by generating sounds with different volumes and/or plural types of sound, wherein the switching of a mode of the drive means (28) and an adjustment of a volume and/or the generation of a type of sound are performed with a kind of operation.

2. Method of operating a vehicle, in particular a motorcycle, by generating sounds with different volumes and plural types of sound, wherein a selection of a type of sound and an adjustment of a volume of the sound are performed with a kind of operation.

3. Method according to claim 1 or 2, **characterized in that** the adjustment of the volume is performed according to a duration of the kind of operation or the number of times of operation included in the kind of operation.

4. Method according to at least one of the claims 1 to 3, **characterized in that** the kind of operation comprises one or more operations of a single type of operation.

5. Method according to at least one of the claims 1 to 4, **characterized by** generating a sound corresponding to each of plural events which occur in the vehicle (1), wherein at least the sounds corresponding to two events of the plural events are . different from each other.

6. Method according to at least one of the claims 1 to 5, **characterized in that** in the case in which one theme is associated with the plural types of sounds and the theme is set in plural forms the selection of a type of sound is performed by selecting one theme of the plural forms of the theme.

7. Method according to claim 6, **characterized in that** the plural types of sounds to which the one theme is associated correspond to the plural events which occur in the vehicle (1).

8. A vehicle, in particular operable by a method, according to at least one of the claims 1 to 7, comprising:
a drive means (28) being switchable to plural modes,
a sound generation means (83) capable of generating sounds of different volumes and/or plural types of sound, and
a controller (182), which is capable of performing a switching of a mode of the drive means (28) and an adjustment of a volume and/or the generation of a type of sound of the sound generation means (83) with a kind of operation.

9. A vehicle, in particular operable by a method, according to at least one of the claims 1 to 7, comprising a sound generation means (83) capable of generating sounds with different volumes and plural types of sound, and a controller (812) which is capable of performing selection of a type of sound and an adjustment of a volume of the sound with a kind of operation.

10. Vehicle according to claim 8 or 9, **characterized by** comprising plural operation elements (821,822,823) which are operable by the kind of operation.

11. Vehicle according to at least one of the claims 8 to 10, **characterized in that** each of the plural types of sound is allocated to each of the plural operation elements (821,822,823).

12. Vehicle according to at least one of the claims 8 to 11, **characterized in that** the controller (812) is capable of performing the adjustment of volume according to duration of the kind of operation or the number of times of operation included in the kind of operation.

13. Vehicle according to at least one of the claims 8 to 12, **characterized in that** the kind of operation comprises one or more operations of a single type of operation, in particular the actuation of an operation element (821,822,823).

14. Vehicle according to at least one of the claims 8 to 13, **characterized in that** the sound generation means (83) is capable of generating a sound corresponding to each of plural events which occur in the vehicle (1), wherein at least the sounds corresponding to two events included in the plural events are different from each other.

15. Vehicle according to at least one of the claims 10 to 14, **characterized in that** the operation elements (821,822,823) are provided in a display means (8) for displaying a vehicle speed.

16. Vehicle according to at least one of the claims 10 to 15, **characterized in that** the operation elements (821,822,823) are push switches.

17. Vehicle according to any one of claims 8 to 16, **characterized in that** the drive means (28) is switchable to an operation waiting mode (M2) in which the vehicle (1) is unable to start to move and to a travel mode (M5) in which the vehicle (1) is able to start to move.

18. Vehicle according to any one of claims 8 to 17, **characterized in that** the vehicle (1) is a saddle-ride type vehicle, in particular an electric motorcycle.
